# EUROPEAN PATENT SPECIFICATION

(11) **EP 3 242 794 B1**
(45) Date of publication and mention of the grant of the patent: **30.12.2020**
(21) Application number: 16735527.0
(22) Date of filing: 09.01.2016
(51) Int. Cl.: B32B 3/26

(54) **ZERO-POROSITY NPR STRUCTURE AND TUNING OF NPR STRUCTURE FOR PARTICULAR LOCALITIES**
POROSITÄTSFREIE NPR-STRUKTUR UND ABSTIMMUNG EINER NPR-STRUKTUR FÜR BESTIMMTE ORTE
STRUCTURE NPR À POROSITÉ NULLE ET RÉGLAGE DE STRUCTURE NPR POUR DES RÉGIONS PARTICULIÈRES

(30) Priority: 09.01.2015 US 201562101823 P; 20.02.2015 US 201562118819 P
(43) Date of publication of application: 15.11.2017
(73) Proprietor: President and Fellows of Harvard College, Cambridge, MA 02138 (US); Booth-morrison, Christopher, Otterburn Park, Québec J3H 1B1 (CA); Carson, Carl, J., Beaconsfield, Québec H9W 2G5 (CA); Farhangi, Mehran, Montréal, Québec H3X 2B5 (CA); Gerendas, Miklos, 15838 Am Mellensee (DE); Gillespie, Thomas, Harold, Beaconsfield, Québec H9W 1M1 (CA); Innes, Matthew, Christopher, North Lancaster, Ontario K0C 1Z0 (CA); Jette, François-Xavier, Longueuil, Québec J4H 3A7 (CA); Pham, Minh Quan, Saint-Laurent, Québec H4L 3Y2 (CA); Guerrero, Fabian Enrique Sanchez, Montréal, Québec H4C 2M6 (CA); Scarinci, Thomas, Beaconsfield, Québec H9W 6E1 (CA); Schaenzer, Megan, Montréal, Québec H2L 1R7 (CA); Shanian, Ali, Montréal, Québec H2X 3R4 (CA); Smith-roberge, Evelyne, Montréal, Québec H2X 2K6 (CA); Villien, Benoit, Lasalle, Québec H8P 2L5 (CA)
(72) Inventor: JAVID, Farhad, Somerville, Massachusetts 02143 (US); BERTOLDI, Katia, Somerville, Massachusetts 02143 (US); TAYLOR, Michael, James, Medford, Massachusetts 02155 (US); BOOTH-MORRISON, Christopher, Otterburn Park, Québec J3H 1B1 (CA); CARSON, Carl, J., Beaconsfield, Québec H9W 2G5 (CA); FARHANGI, Mehran, Apt. 306 (CA); GERENDAS, Miklos, 15838 Am Mellensee (DE); GILLESPIE, Thomas, Harold, Beaconsfield, Québec H9W 1M1 (CA); INNES, Matthew, Christopher, RR 1 (CA); JETTE, François-Xavier, Longueuil, Québec J4H 3A7 (CA); PHAM, Minh Quan, Apt. 416 (CA); GUERRERO, Fabian Enrique Sanchez, 379 (CA); SCARINCI, Thomas, Beaconsfield, Québec H9W 6E1 (CA); SCHAENZER, Megan, Apt. 2. (CA); SHANIAN, Ali, Apt 1510 (CA); SMITH-ROBERGE, Evelyne, Apt. 3 (CA); VILLIEN, Benoit, Lasalle, Québec H8P 2L5 (CA)
(74) Representative: Purdylucey Intellectual Property
(86) International application number: PCT/US2016/012765
(87) International publication number: WO 2016/112364

(56) References cited:
- WO-A1-2014/149078
- WO-A1-2014/151045
- WO-A1-2014/197059
- US-A- 2 738 297
- US-A- 2 738 297
- US-A1- 2005 153 634
- US-A1- 2011 059 291
- US-A1- 2011 059 291
- US-A1- 2011 168 313
- US-B1- 6 780 361
- Dong Li ET AL: "Temperature insensitive negative Poisson's ratios in isotropic alloys near a morphotropic phase boundary", Applied Physics Letters, 1 January 2012 (2012-01-01), pages 1-4, XP055464789, DOI: 10.1063/1.4772940 Retrieved from the Internet: URL:http://silver.neep.wisc.edu/~lakes/Poi ssonPhaseAPL12.pdf [retrieved on 2018-04-05]
- LI ET AL.: 'Temperature insensitive negative Poisson's ratios in isotropic alloys near a morphotropic phase boundary.' APPLIED PHYSICS LETTERS, [Online] 01 January 2012, pages 1 - 4, XP055464789 DOI: 10.1063/1.4772940 Retrieved from the Internet: <URL:HTTP://SILVER.NEEP.WISC.EDU/~LAKES/POI SSONPHASEAPL12.PDF> [retrieved on 2016-02-26]
- SCHENK FOLDED SHELL STRUCTURES, [Online] 31 August 2011, pages 1 - 155, XP055464794 Retrieved from the Internet: <URL:HTTP://WWW.MARKSCHENK.COM/RESEARCH/FIL ES/PHD%20THESIS%20-%20MARK%20SCHENK.PDF> [retrieved on 2016-02-26]

## Description

### TECHNICAL FIELD

The present disclosure relates generally to materials possessing a Negative Poisson's Ratio ("NPR"), as well as systems, methods and devices using such materials.

### BACKGROUND

When materials are compressed along a particular axis they are most commonly observed to expand in directions orthogonal to the applied load. The property that characterizes this behavior is the Poisson's Ratio, which can be defined as the ratio between the negative transverse and longitudinal strains. The majority of materials are characterized by a positive Poisson's Ratio, which is approximately 0.5 for rubber and 0.3 for glass and steel.

Materials with a Negative Poisson's Ratio will contract (or expand) in the transverse direction when compressed (or stretched) and, although they can exist in principle, demonstration of practical examples is relatively recent. Materials that exhibit negative Poisson's Ratio behavior are oftentimes referred to as "auxetics". The results of many investigations suggest that the auxetic behavior involves an interplay between the microstructure of the material and its deformation. Examples of this are provided by the discovery that metals with a cubic lattice, natural layered ceramics, ferro-electric polycrystalline ceramics, and zeolites may all exhibit negative Poisson's Ratio behavior. Moreover, several geometries and mechanisms have been proposed to achieve negative values for the Poisson's Ratio, including foams with reentrant structures, hierarchical laminates, polymeric and metallic foams. Negative Poisson's Ratio effects have also been demonstrated at the micrometer scale using complex structures which were fabricated using soft lithography and at the nanoscale with sheets assemblies of carbon nanotubes.

U.S. Patent No. 5,233,828 ("'828 Patent"), to Phillip D. Napoli, shows an example of an engineered structural member - a combustor liner - utilized in high temperature applications. Combustor liners are generally used in the combustion section of a gas turbine, but can also be used in the exhaust section or in other sections of or components of the gas turbine, such as the turbine blades. In operation, the combustors burn gas at intensely high temperatures, such as around 3,000°F or higher. To prevent this intense heat from damaging the combustor before it exits to a turbine, the combustor liner is inserted in the combustor to insulate the surrounding engine. To minimize temperature and pressure differentials across the combustor liners, cooling slots have conventionally been provided, such as is shown in '828 Patent. The '828 Patent shows a portion of an annular combustor liner having spaced cooling holes disposed in a continuous pattern, angled through the wall of the liner. U.S. Patent No. 8,066,482 B2, to James Page Strohl et al., shows another example of an engineered structural member having cooling holes shaped to enhance the cooling of a desired region of a gas turbine and to reduce stress levels in and around the cooling holes. European Patent No. EP 0971172 A1, to Dr. Jakob Keller, likewise shows another example of a perforated liner used in a combustion zone of a gas turbine. In yet another example, U.S. Patent Application Pub. No. 2010/0009120 A1, to Mary C. Boyce et al., discloses a number of transformative periodic structures which include elastomeric or elasto-plastic periodic solids that experience transformation in the structural configuration upon application of a critical macroscopic stress or strain. PCT patent application PCT/US2014/025324, to the President and Fellows of Harvard College, discloses, *inter alia,* void structures with repeating elongated-aperture patterns providing Negative Poisson's Ratio behavior. PCT patent application PCT/US2014/024830, to the President and Fellows of Harvard College, discloses, *inter alia,* a solid having an engineered void structure that causes the solid (having a positive Poisson's ratio) to exhibit pseudo-auxetic (NPR) behavior upon application of stress to the solid. The engineered void structure provides a porosity amenable to, for example, applications involving gas turbine combustors. All of the foregoing patent documents are incorporated herein by reference in their respective entireties for all purposes.

### SUMMARY OF THE INVENTION

The present disclosure is directed to transformation of a sheet structure, or one or more subparts thereof, having a Positive Poisson's Ratio (PPR) to a Negative Poisson's Ratio (an "auxetic" structure) along one or more axes.

In at least some aspects of the present concepts, a zero-porosity structure comprises a zero-porosity material comprising a plurality of structural elements arranged to provide a negative Poisson's ratio. In some aspects, the structure comprises a sheet material such as, but not limited to a sheet-steel, strip steel, sheet-metal. In other aspects, the structure may comprise, but is not limited to, a casting or plate metal. In still other aspects, the structure may comprise other form factors and materials including, but not limited to composite materials, polymers and metal alloys.

In at least some other aspects of the present concepts, a zero-porosity structure comprises a first material portion comprising a first tiling of a first plurality of structural elements, and a second material portion comprising a second tiling of a second plurality of structural elements, wherein the first tiling is different from the second tiling and wherein at least one of the first material portion or the second material portion provides, responsive to the respective tiling configuration, at least one of a predetermined local negative Poisson's ratio or a predetermined global negative Poisson's ratio.

In yet other aspects of the present concepts, a method for constructing a zero-porosity structure comprises acts of establishing design constraints for the zero-porosity structure and determining, within the design constraints, at least one tiling pattern bearing a plurality of structural elements having one or more shapes that provide, in the aggregate a resultant negative Poisson's ratio for the structure. The method also includes the act of constructing the zero-porosity structure consistent with the act of determining.

In yet another aspect of the present concepts, a zero-porosity structure comprises a thin-walled structure having formed therein a plurality of structural elements defined which may comprise spherical caps or may be defined by the function $z = f \left(x, y\right) = exp \left(δ\left[1-\frac{1}{1 - {\left|\frac{x}{a}\right|}^{α} - {\left|\frac{y}{b}\right|}^{β}}\right]\right)$ restricted to: ${\left|\frac{x}{a}\right|}^{α} + {\left|\frac{y}{b}\right|}^{β} < 1$
wherein *a* and *b* control the aspect ratio of the ellipsoid in the *f(x,y)* = *0* plane, δ shows the structural element's maximum depth, and α, β vary the out-of-plane curvature, and wherein the structural elements, as a whole, provide the structure with a negative Poisson's ratio.

The above summary is not intended to represent each embodiment or every aspect of the present disclosure. Rather, the summary merely provides an exemplification of some of the novel features presented herein. The above features and advantages, and other features and advantages of the present disclosure, will be readily apparent from the following detailed description of exemplary embodiments and modes for carrying out the present invention when taken in connection with the accompanying drawings and the appended claims.

### BRIEF DESCRIPTION OF THE DRAWINGS

FIG. 1(a) presents isometric and side depictions, respectively, of a sheet patterned with a plurality of structural elements exiting a plane of the sheet in the same direction according to at least some aspects of the present disclosure.
FIG. 1(b) presents isometric and side depictions, respectively, of a sheet patterned with a plurality of structural elements having differing (e.g., alternating as shown) concavities according to at least some aspects of the present disclosure.
FIG. 1(c) shows a different representation of the sheet according to FIG. 1(b), wherein the sheet is patterned with a series of structural elements with differing (e.g., alternating as shown) concavities.
FIG. 1(d) shows a tubular thin-walled structure patterned with a series of inwardly-directed structural elements according to at least some aspects of the present disclosure.
FIGS. 2(a)-2(h) show a variety of non-limiting tiling patterns for sheets bearing a plurality of structural elements, such as those shown in FIGS. 1(a)-1(d), according to at least some aspects of the present disclosure.

While aspects of this disclosure are susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION

The drawings and description herein provide representative embodiments of the invention with the understanding that the present disclosure is to be considered as an exemplification of the principles of the invention and is not intended to limit the broad aspects of the invention to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference or otherwise.

For purposes of the present detailed description, unless specifically disclaimed: the singular includes the plural and vice versa; the words "and" and "or" shall be both conjunctive and disjunctive; the word "all" means "any and all"; the word "any" means "any and all"; and the words "including" and "comprising" mean "including without limitation." Moreover, words of approximation, such as "about," "almost," "substantially," "approximately," and the like, can be used herein in the sense of "at, near, or nearly at," or "within 3-5% of," or "within acceptable manufacturing tolerances," or any logical combination thereof, for example.

Aspects of the present disclosure are directed towards structures possessing a plurality of structural elements such as, but not limited to concave and/or convex structures or "dimples," formed in a pattern that, in the aggregate, provide a local and/or a global Negative Poisson's Ratio (NPR) or auxetic behavior.

Contrary to the type of NPR structure disclosed in, for example, those described in WO 2014/151045 A1 and US 2011/0059291 A1, incorporated herein by reference in their respective entireties for all purposes, the NPR structures disclosed herein have no porosity.

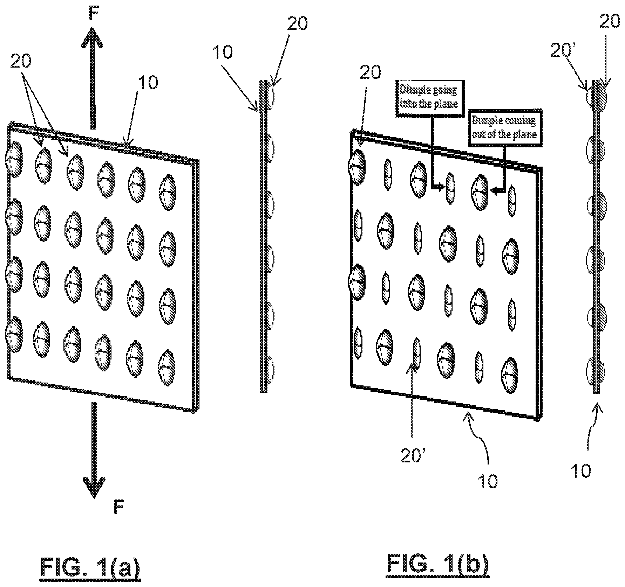

FIGS. 1(a)-1(b) present isometric and side depictions, respectively, of (a) a structure 10 (e.g., a sheet material, etc.) patterned with a plurality of structural elements 20 (e.g., "dimples") exiting a plane of the material in the same direction and (b) a structure 10 patterned with a first plurality of structural elements 20 configured to exit a plane of the material in a first direction (e.g., normal to the plane of the sheet, etc.) and a second plurality of structural elements 20' configured to exit a plane of the material in a second direction (e.g., normal to the plane of the sheet in a direction opposite to the first direction, etc.).

In various aspects, the structure comprises a metal, aluminum, steel, and/or an alloy, as appropriate for a particular application. By way of example, in certain high temperature applications, a suitable material may comprise, but is not limited to, a "superalloy" such as a nickel-based superalloy (e.g., Inconel (e.g. IN100, IN600, IN713), Waspaloy, Rene alloys (e.g. Rene 41, Rene 80, Rene 95, Rene N5), Haynes alloys, Incoloy, MP98T, TMS alloys, and CMSX (e.g. CMSX-4) single crystal alloys, etc.).

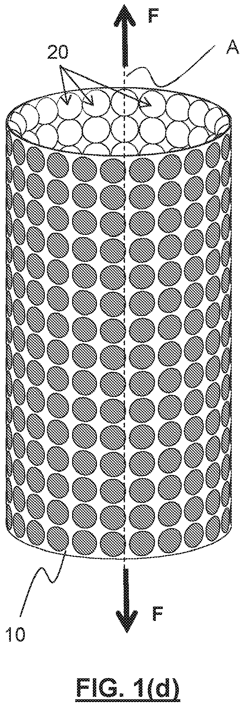

The structural element 20, or combination(s) of different structural elements (e.g., 20, 20'), transform the underlying structure 10 from a Positive Poisson's Ratio (PPR) to a Negative Poisson's Ratio (NPR) responsive to stresses acting along one or more axes such as, but not limited to, tensile force F represented in FIG. 1(a) or FIG. 1(d).

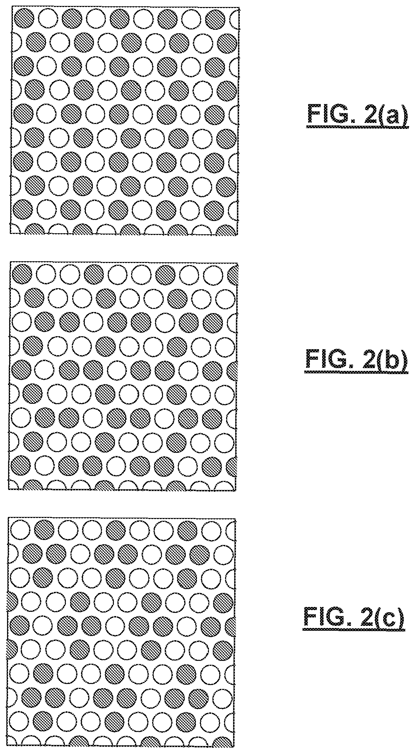

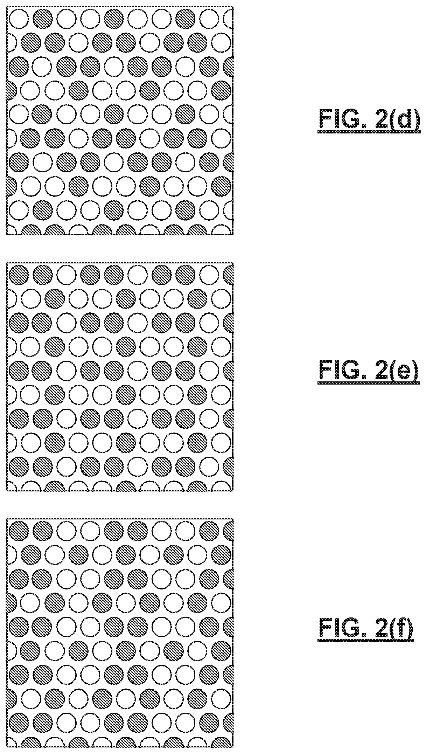

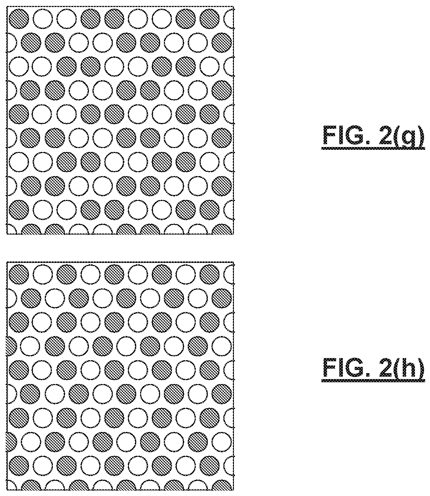

As shown in FIG. 1(b), the first structural elements 20 and the second structural elements 20' are shown in an alternating relationship. However, this exemplary arrangement is non-limiting and the present concepts expressly including any tiling arrangement of one or more structural elements, as disclosed herein, that provide a Negative Poisson's Ratio (NPR). By way of example, further non-limiting tiling patterns for sheets bearing a plurality of structural elements are shown in FIGS. 2(a)-2(h).

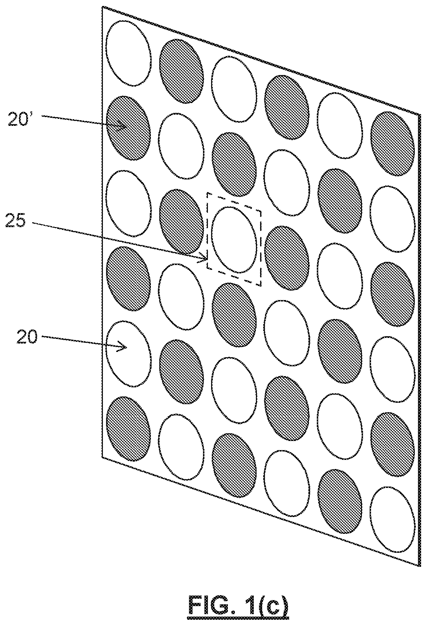

FIG. 1(c) shows a different representation of the sheet according to FIG. 1(b), wherein the sheet is patterned with first structural elements 20 (illustrated as white circles) exiting or extending beyond a plane of the structure 10 in a first direction (e.g., normal to the plane of the sheet, etc.) and second structural elements 20' (illustrated as shaded circles) exiting or extending beyond a plane of the material in a second direction (e.g., normal to the plane of the sheet in a direction opposite to the first direction, etc.).

The convention of white circles and shaded circles will further be used in FIGS. 1(d) and 2(a)-2(h) to visually represent structural elements 20, 20' respectively exiting a plane of the structure 10 in different directions (e.g., opposite directions). By way of example, the white circles represent, from a particular reference frame, a convex structure, whereas the shaded circles represent, from that same vantage of the reference frame, a concave structure.

FIG. 1(d) shows an example of a structure 10 formed into a cylindrical shape and patterned with a plurality of structural elements 20 (e.g., dimples) exiting a plane of the sheet in the same direction (inwardly toward a central axis "A" of the cylinder in the example shown). By virtue of the structural elements, in the configuration depicted, the structure 10 is formed to possess a Negative Poisson's Ratio (NPR) rather than a Positive Poisson's Ratio (PPR).

In at least some aspects, the structural elements 20, 20' in FIGS. 1(a)-1(d) comprise spherical caps. As defined herein, "spherical cap" refers to one of the sections resulting from cutting a sphere along a given plane. In the examples shown in FIGS. 1(a)-1(d), the spherical cap structural elements 20, 20' are shown with arbitrarily chosen cross-sections, depth, and out-of-plane profiles for purposes of illustration and these parameters may be varied in accord with various aspects of the present concepts. Specifically, while the illustrated examples show uniformity in the structural elements 20 and 20' (i.e., the examples all show spherical cap structural elements), the present concepts expressly include utilization of different structural elements (e.g., spherical, spheroidal or ellipsoidal caps) on or side or on both sides of the structure 10. The structural elements could comprise, for example, entirely elliptical structural elements a combination of different structural elements, such as a combination of spherical cap structural elements and elliptical structural elements. For any of these structural elements, the structural element can vary in depth, aspect ratio, and steepness of incline, among other design variables.

The structural elements 20, 20', however, could be arranged in different shapes including triangular, square, rhomboidal, and hexagonal lattices. In all cases the structural elements 20, 20' can extend from one side or both sides of the material, which may comprise a flat sheet or a curved or curvilinear material. Some non-limiting arrangements of structural elements 20, 20' are illustrated in FIGS. 2(a)-2(h). It is to be noted, however, that not all these tiling patterns necessarily lead to a global NPR behavior. Instead, some tiling patterns are advantageously utilized to generate special patterns of shrinkage or expansion in the displacement field of the structure. As in the aforementioned cases, such structural elements (e.g., dimples, etc.) are not restricted to spherical caps, but can vary greatly in depth, aspect ratio, and steepness of incline, among other features.

As noted above with respect to FIG. 1(a), one aspect of the present concepts comprises a square lattice of identical structural elements 20 exiting a plane of the structure 10 in the same direction. The structure of FIG. 1(a) exhibits auxetic behavior in cylindrical structures, such as is shown in FIG. 1(d), when subjected to loading, such as is represented by axial forces F. The structure of FIGS. 1(b) and 1(c), on the other hand, shows NPR behavior in planar structures under uniaxial loading.

Although the cross-section, depth and/or out-of-plane profiles can vary significantly in accord with the present concepts, not all possible combinations lead to NPR behavior. The NPR behavior was observed in thin shell structures where the thickness of the material was around 10 times smaller than the other dimensions. In the simulations performed by the inventors, it was observed that the NPR behavior fades away if the radius of the structural element (e.g., spherical cap) cross-section is less than 10 times that of the plate thickness. It was further determined that the cross-sectional area of the structural elements needed to cover a large area of the material surface (e.g., in general, more than about 50%). A pseudo-porosity for structural elements can be defined as the ratio between the combined structural element's cross-sectional area (A_{SE}) and the area (A_{S}) of the entire structure (i.e., Pseudo-porosity = A_{SE} / A_{S}). In a local area (e.g., a unit cell), the pseudo-porosity can be understood as the ratio between the area of one of the structural elements (e.g., a white circle shown in FIG. 1 (c)) and that of an imaginary geometric element (e.g., square) surrounding it, such as is shown by the dashed-line square 25 in FIG. 1(c). For a spherical structural element, the pseudo-porosity of the structure is desirably around 50% or higher to ensure NPR behavior. Finally, as noted, the depth of the structural element(s) can also affect the NPR behavior. For example, in spherical structural elements, the optimal value for depth of the structural element is around half that of the radius of the structural element.

As noted above, the structural elements can assume a variety of shapes (including a plurality of shapes for a given material or sub-portion of a material) and can be optimized to impart desired mechanical properties to the material or sub-portion thereof. In addition to the aforementioned geometric shapes such as spherical and spheroidal caps, many different functions can be used to create the structural element profile. For example, a structural element can be generated using the following function: $z = f \left(x, y\right) = exp \left(δ\left[1-\frac{1}{1 - {\left|\frac{x}{a}\right|}^{α} - {\left|\frac{y}{b}\right|}^{β}}\right]\right)$ Restricted to: ${\left|\frac{x}{a}\right|}^{α} + {\left|\frac{y}{b}\right|}^{β} < 1$

This structural element can then be tiled on a plane in order to achieve the desired structural element configuration. Alternatively, this structural element can be tiled and alternately inverted on a plane in order to achieve a desired structural element configuration. In the function presented above, *a* and *b* control the aspect ratio of the ellipsoid in the *f(x,y)* = *0* plane, δ shows the structural element's (e.g., dimple's) maximum depth, and α, β vary the out-of-plane curvature. The NPR structures can take the form of any material characterized by structural elements sharing a similar shape to those which can be created using the above function.

The main advantage of the proposed structures lies in their non-porousness and the low stress values exhibited under displacement-controlled loading. Since the disclosed zero-porosity NPR materials are non-porous and permit no fluids to pass, they present an excellent candidate for utilization in any structure for which porosity would be disadvantageous such as, but not limited to, turbine components, heat exchangers, piping, supports, fuselages, automotive or vehicular components, or any other structure or component subjected to mechanical and/or thermal loading.

Moreover, tiling patterns may be varied along a particular material or structure to provide tailored localized auxetic behavior and accommodate optimization for more complex applications where different behaviors are required in different sections of a structure. For example, a particular structural element (e.g., a gas turbine combustor component, combustor liner, etc.) may comprise a first material portion having a first tiling pattern comprising one or more distinct structural element types (e.g., arrangement, shape(s), density/densities, depth(s), etc.), a second material portion having a second tiling pattern comprising one or more distinct structural element types, a third material portion having a third tiling pattern comprising one or more distinct structural element types, to an *n*^{th} material portion having an *n*^{th} tiling pattern comprising one or more distinct structural element types.

The disclosed structures show very low stress values under displacement-controlled cases and demonstrate relatively high structural stiffness, which make them very good candidates for use in both load- and displacement-controlled loading conditions.

Regarding the process for selection of specific structural elements, tilings, and shapes, such process is largely informed by external design constraints. The following general concepts are not intended to be restrictive in nature, but are disclosed to illustrate some considerations of the design process. Some initial considerations are generally the dimension limitation on the out-of-plane size (e.g., depth or height) of the structural elements and the thickness of the material (e.g., metal sheet, etc.) The shape type of the structural element (e.g., whether spherical, ellipsoidal, or another shape) is determined by (1) the required negativity of the Poisson's ratio and (2) the maximum allowable stress for the application. If very low negative PRs are required, ellipsoidal structural elements are preferred over spherical ones. Further, the local shape of the structure (e.g., cylindrical, planar, curved, etc.) will influence the direction(s) in which the structural elements exit the plane of the material in that location and/or the tiling pattern. If the maximum stress is a major contributor to the structure's design, spherical dimples are preferred. In view of the above considerations, the size(s) of the microstructure of the structural elements are determined, as is the spacing thereof to arrive at the necessary local and global Poisson's ratio(s). Of course, the order of operations may be freely changed in accord with the present concepts in view of the available design information and imposed constraints. Purely for illustrative purposes, the present concepts even include trial and error optimization techniques in which a variety of tiling patterns, structural element shapes and structural element orientations are iteratively applied for a particular structure to determine an optimal combination of structural element features and placements to attain a desired local and/or global NPR characteristic.

Although the present concepts are disclosed in relation to a variety of patterns or tilings, the present concepts are not limited to utilization of a pattern or tiling. By way of example, the present concepts may even advantageously adopt a local or global randomized distribution, subject to local or global constraints (allowable stress, loading, unloading, peak stress, etc.) to achieve a desired global local or global NPR. Thus, in a given area of a material, locations of structural elements could be disposed in a manner that produces an asymmetrical pattern and yields a desired global local NPR.

## Claims

1. A zero-porosity structure comprising:
a zero-porosity material comprising a plurality of structural elements arranged to transform an underlying structure from a positive Poisson's Ratio to provide a negative Poisson's ratio.

2. The zero-porosity structure according to claim 1, wherein the structural elements comprise at least a first plurality of structural elements configured to exit a plane of the material in a first direction.

3. The zero-porosity structure according to claim 2, wherein the structural elements comprise at least a second plurality of structural elements configured to exit a plane of the material in a second direction different than the first direction.

4. The zero-porosity structure according to claim 3,
wherein the first direction is a normal direction to a first side of the material, and
wherein the second direction is a normal direction to a second side of the material.

5. The zero-porosity structure according to claim 2, wherein the first plurality of structural elements are arranged in at least one tiling pattern on the material.

6. The zero-porosity structure according to claim 3, wherein the first plurality of structural elements and the second plurality of structural elements are arranged in at least one tiling pattern on the material.

7. The zero-porosity structure according to any one of claims 1, 2 or 5, wherein at least one of the first plurality of structural elements comprise a spherical cap.

8. The zero-porosity structure according to any one of claims 1, 2 or 5, wherein at least one of the first plurality of structural elements comprise an ellipsoidal structure.

9. The zero-porosity structure according to any one of claims 1-6, wherein at least one of the first plurality of structural elements or at least one of the second plurality of structural elements comprises a spherical cap.

10. The zero-porosity structure according to any one of claims 1-6, wherein at least one of the first plurality of structural elements or at least one of the second plurality of structural elements comprises an ellipsoidal structure.

11. The zero-porosity structure according to any one of claims 1-6,
wherein at least one of the first plurality of structural elements or at least one of the second plurality of structural elements has a shape defined by the function $z = f \left(x, y\right) = exp \left(δ\left[1-\frac{1}{1 - {\left|\frac{x}{a}\right|}^{α} - {\left|\frac{y}{b}\right|}^{β}}\right]\right)$ wherein ${\left|\frac{x}{a}\right|}^{α} + {\left|\frac{y}{b}\right|}^{β} < 1$
wherein *a* and *b* control the aspect ratio of the ellipsoid in the *f(x,y)* = *0* plane,
wherein δ shows the structural element's maximum depth, and
wherein α, β vary the out-of-plane curvature.

12. The zero-porosity structure according to claim 11, wherein a configuration of all of the first plurality of structural elements are governed by said function.

13. The zero-porosity structure according to claim 12, wherein a configuration of all of the second plurality of structural elements are governed by said function.

14. A method for constructing a zero-porosity structure comprising the acts of:
establishing design constraints for the zero-porosity structure,
determining, within the design constraints, at least one tiling pattern bearing a plurality of structural elements having one or more shapes that transform an underlying structure of the zero-porosity structure from a positive Poisson's Ratio to provide, in the aggregate a resultant negative Poisson's ratio for the structure, and
constructing the zero-porosity structure consistent with the act of determining.

15. The method for constructing a zero-porosity structure according to claim 14, wherein the at least one tiling pattern comprises a plurality of tiling patterns.

## Patentansprüche

1. Porositätsfreie Struktur, die Folgendes umfasst:
ein porositätsfreies Material, das eine Vielzahl von Strukturelementen umfasst, die dazu angeordnet sind, eine zugrunde liegende Struktur von einer positiven Poissonzahl aus umzuwandeln, um eine negative Poissonzahl bereitzustellen.

2. Porositätsfreie Struktur nach Anspruch 1, wobei die Strukturelemente mindestens eine erste Vielzahl von Strukturelementen umfassen, die dazu konfiguriert sind, aus einer Ebene des Materials in einer ersten Richtung auszutreten.

3. Porositätsfreie Struktur nach Anspruch 2, wobei die Strukturelemente mindestens eine zweite Vielzahl von Strukturelementen umfassen, die dazu konfiguriert sind, aus einer Ebene des Materials in einer von der ersten Richtung verschiedenen zweiten Richtung auszutreten.

4. Porositätsfreie Struktur nach Anspruch 3,
wobei es sich bei der ersten Richtung um eine Normalenrichtung zu einer ersten Seite des Materials handelt, und
wobei es sich bei der zweiten Richtung um eine Normalenrichtung zu einer zweiten Seite des Materials handelt.

5. Porositätsfreie Struktur nach Anspruch 2, wobei die erste Vielzahl von Strukturelementen in mindestens einem Kachelmuster auf dem Material angeordnet ist.

6. Porositätsfreie Struktur nach Anspruch 3, wobei die erste Vielzahl von Strukturelementen und die zweite Vielzahl von Strukturelementen in mindestens einem Kachelmuster auf dem Material angeordnet sind.

7. Porositätsfreie Struktur nach einem der Ansprüche 1, 2 oder 5, wobei mindestens eines der ersten Vielzahl von Strukturelementen eine kugelförmige Kappe umfasst.

8. Porositätsfreie Struktur nach einem der Ansprüche 1, 2 oder 5, wobei mindestens eines der ersten Vielzahl von Strukturelementen eine ellipsoide Struktur umfasst.

9. Porositätsfreie Struktur nach einem der Ansprüche 1-6, wobei mindestens eines der ersten Vielzahl von Strukturelementen oder mindestens eines der zweiten Vielzahl von Strukturelementen eine kugelförmige Kappe umfasst.

10. Porositätsfreie Struktur nach einem der Ansprüche 1-6, wobei mindestens eines der ersten Vielzahl von Strukturelementen oder mindestens eines der zweiten Vielzahl von Strukturelementen eine ellipsoide Struktur umfasst.

11. Porositätsfreie Struktur nach einem der Ansprüche 1-6,
wobei mindestens eines der ersten Vielzahl von Strukturelementen oder mindestens eines der zweiten Vielzahl von Strukturelementen eine Form aufweist, die durch die folgende Funktion definiert wird: $z = f \left(x, y\right) = exp \left(δ\left[1-\frac{1}{1 - {\left|\frac{x}{a}\right|}^{α} - {\left|\frac{y}{b}\right|}^{β}}\right]\right)$ wobei ${\left|\frac{x}{a}\right|}^{α} + {\left|\frac{y}{b}\right|}^{β} < 1$
wobei *a* und *b* das Seitenverhältnis des Ellipsoids in der Ebene *f(x,y)* = *0* steuern,
wobei δ die maximale Tiefe des Strukturelements angibt, und
wobei α, β die Krümmung aus der Ebene variieren.

12. Porositätsfreie Struktur nach Anspruch 11, wobei eine Konfiguration aller der ersten Vielzahl von Strukturelementen durch die Funktion bestimmt wird.

13. Porositätsfreie Struktur nach Anspruch 12, wobei eine Konfiguration aller der zweiten Vielzahl von Strukturelementen durch die Funktion bestimmt wird.

14. Verfahren zum Herstellen einer porositätsfreien Struktur, das folgende Handlungen umfasst:
Festlegen von Auslegungsrandbedingungen für die porositätsfreie Struktur,
Bestimmen, innerhalb der Auslegungsrandbedingungen, mindestens eines Kachelmusters, das eine Vielzahl von Strukturelementen mit einer oder mehreren Formen, die eine zugrundeliegende Struktur der porositätsfreien Struktur von einer positiven Poissonzahl aus umwandeln, trägt, um in der Gesamtheit eine resultierende negative Poissonzahl für die Struktur bereitzustellen, und
Herstellen der porositätsfreien Struktur passend zu der Handlung des Bestimmens.

15. Verfahren zum Herstellen einer porositätsfreien Struktur nach Anspruch 14, wobei das mindestens eine Kachelmuster eine Vielzahl von Kachelmustern umfasst.

## Revendications

1. Structure à porosité nulle comprenant :
un matériau à porosité nulle comprenant une pluralité d'éléments structuraux agencés pour transformer une structure sous-jacente à partir d'un coefficient de Poisson positif pour fournir un coefficient de Poisson négatif.

2. Structure à porosité nulle selon la revendication 1, dans laquelle les éléments structuraux comprennent au moins une première pluralité d'éléments structuraux configurés pour sortir d'un plan du matériau dans une première direction.

3. Structure à porosité nulle selon la revendication 2, dans laquelle les éléments structuraux comprennent au moins une deuxième pluralité d'éléments structuraux configurés pour sortir d'un plan du matériau dans une deuxième direction différente de la première direction.

4. Structure à porosité nulle selon la revendication 3,
dans laquelle la première direction est une direction normale à un premier côté du matériau, et
dans laquelle la deuxième direction est une direction normale à un deuxième côté du matériau.

5. Structure à porosité nulle selon la revendication 2, dans laquelle la première pluralité d'éléments structuraux sont agencés selon au moins un motif à carreaux sur le matériau.

6. Structure à porosité nulle selon la revendication 3, dans laquelle la première pluralité d'éléments structuraux et la deuxième pluralité d'éléments structuraux sont agencés selon au moins un motif à carreaux sur le matériau.

7. Structure à porosité nulle selon l'une quelconque des revendications 1, 2 ou 5, dans laquelle au moins un élément structural de la première pluralité d'éléments structuraux comprend une calotte sphérique.

8. Structure à porosité nulle selon l'une quelconque des revendications 1, 2 ou 5, dans laquelle au moins un élément structural de la première pluralité d'éléments structuraux comprend une structure ellipsoïdale.

9. Structure à porosité nulle selon l'une quelconque des revendications 1 à 6, dans laquelle au moins un élément structural de la première pluralité d'éléments structuraux ou au moins un élément structural de la deuxième pluralité d'éléments structuraux comprend une calotte sphérique.

10. Structure à porosité nulle selon l'une quelconque des revendications 1 à 6, dans laquelle au moins un élément structural de la première pluralité d'éléments structuraux ou au moins un élément structural de la deuxième pluralité d'éléments structuraux comprend une structure ellipsoïdale.

11. Structure à porosité nulle selon l'une quelconque des revendications 1 à 6,
dans laquelle au moins un élément structural de la première pluralité d'éléments structuraux ou au moins un élément structural de la deuxième pluralité d'éléments structuraux a une forme définie par la fonction $z = f \left(x, y\right) = exp \left(δ\left[1-\frac{1}{1 - {\left|\frac{x}{a}\right|}^{α} - {\left|\frac{y}{b}\right|}^{β}}\right]\right)$ dans laquelle : ${\left|\frac{x}{a}\right|}^{α} + {\left|\frac{y}{b}\right|}^{β} < 1$
dans laquelle *a* et *b* commandent le rapport d'aspect de l'ellipsoïde dans le plan *f*(*x,y*) = 0,
dans laquelle *δ* indique la profondeur maximale de l'élément structural, et
dans laquelle *α*, *β* font varier la courbure hors plan.

12. Structure à porosité nulle selon la revendication 11, dans laquelle une configuration de tous les éléments structuraux de la première pluralité d'éléments structuraux est régie par ladite fonction.

13. Structure à porosité nulle selon la revendication 12, dans laquelle une configuration de tous les éléments structuraux de la deuxième pluralité d'éléments structuraux est régie par ladite fonction.

14. Procédé pour la construction d'une structure à porosité nulle comprenant les actes consistant à :
établir des contraintes de conception pour la structure à porosité nulle, déterminer, au sein des contraintes de conception, au moins un motif à carreaux portant une pluralité d'éléments structuraux ayant une ou plusieurs formes qui transforment une structure sous-jacente de la structure à porosité nulle à partir d'un coefficient de Poisson positif pour fournir, dans l'agrégat, un coefficient de Poisson négatif résultant pour la structure, et
construire la structure à porosité nulle conformément à l'acte de détermination.

15. Procédé pour la construction d'une structure à porosité nulle selon la revendication 14, dans lequel l'au moins un motif à carreaux comprend une pluralité de motifs à carreaux.
